# EUROPÄISCHE PATENTSCHRIFT

(11) **EP 2 805 602 B1**
(45) Veröffentlichungstag und Bekanntmachung des Hinweises auf die Patenterteilung: **16.05.2018**
(21) Anmeldenummer: 14158004.3
(22) Anmeldetag: 06.03.2014
(51) Int. Cl.: A01F 12/18, A01F 12/52

(54) **Mähdrescher**
Combine harvester
Moissonneuse-batteuse

(30) Priorität: 17.05.2013 DE 102013105081; 19.06.2013 DE 102013106371
(43) Veröffentlichungstag der Anmeldung: 26.11.2014
(73) Patentinhaber: CLAAS Selbstfahrende Erntemaschinen GmbH, 33428 Harsewinkel (DE)
(72) Erfinder: Roberg, Alfons, 33428 Harsewinkel (DE)

(56) Entgegenhaltungen:
- EP-A1- 2 064 941
- DE-A1- 2 812 655
- GB-A- 1 460 715
- US-A- 3 513 646
- DATABASE WPI Week 201249 Thomson Scientific, London, GB; AN 2012-J35319 XP002738713, -& RU 2 455 816 C1 (VOLG AGRIC ACAD) 20. Juli 2012 (2012-07-20)

## Beschreibung

Die vorliegende Erfindung betrifft einen Mähdrescher gemäß dem Oberbegriff des Anspruches 1.

Die Qualität des Drusch- und Separationsprozess von Erntegut durch einen Mähdrescher ist neben der Erntegutart und den Ernteguteigenschaften von der Einstellung der Arbeitsaggregate abhängig. Während des Drusch- und des sich anschließenden Separationsprozesses wird Korn weitgehend von Nichtkornbestandteilen wie Stroh und Spreu getrennt. Ein erster Gutstrom, der hauptsächlich Korn und in geringem Umfang Stroh und Spreu enthält, wird jeweils von der Dresch- und Abscheidevorrichtung an jeweils einen der Dreschvorrichtung sowie der Abscheidevorrichtung zugeordneten Förderboden abgegeben. Der so aufbereitete erste Gutstrom gelangt über diese Förderböden zu einer Reinigungsvorrichtung, in welcher durch Windsichtung in dem ersten Gutstrom verbliebene Nichtkornbestandteilen ausgeschieden werden. Hierzu umfasst die Reinigungsvorrichtung ein Gebläse sowie mehrere Siebe, welche von dem Gebläse mit einem Luftstrom beaufschlagt werden. Auf Grund der großen zu verarbeitenden Erntegutmengen ist ein vollständiges Ausdreschen der Körner aus den Ähren nicht immer gewährleistet, so dass diese zumindest teilweise mit Körnern besetzten Ähren oder Ährenteile den Mähdrescher durchlaufen und als Verluste gemeinsam mit den Nichtkornbestandteilen ausgeschieden würden. Die teilweise mit Korn besetzten Ähren oder Ährenteile werden als Überkehr bezeichnet und üblicherweise zur Vermeidung von Kornverlust einer Nachdrescheinrichtung zugeführt. Ein zweiter Gutstrom, der sich im Wesentlichen aus Stroh und Spreu zusammensetzt, wird von der Abscheidevorrichtung über eine Verteilvorrichtung auf den Feldboden ausgebracht.

Eine solche Nachdrescheinrichtung ist beispielsweise aus der EP 2 064 941 A1 bekannt, welche einen Mähdrescher gemäß dem Oberbegriff des Anspruches 1 zeigt. Das nicht vollständig ausgedroschene Erntegut wird auf einem Überkehrboden gesammelt und von einer Überkehrschnecke einem Kettenförderer zugeführt. Der Kettenförderer erstreckt sich an der Außenseite des Mähdreschers in vertikaler Richtung und transportiert die Überkehr zu einer Nachdrescheinrichtung, die im Endbereich des Kettenförderers angeordnet ist. Die Nachdrescheinrichtung entspricht in ihrem Aufbau und ihrer Wirkungsweise der einer konventionellen Dreschvorrichtung. In einem Gehäuse befindet sich eine rotierende Trommel, die auf ihrem Umfang verteilt Schlagleisten aufweist. Die Schlagleisten wirken mit korrespondierenden, im Inneren des Gehäuses angeordneten Reibleisten zusammen, um das Korn von den Ähren zu lösen beziehungsweise von Spelzen zu befreien. Durch das Fehlen einer schützenden Strohmatte führt das Nachdreschen zu einem erhöhten Anteil an Bruchkorn. Jedoch ist gerade bei der Ernte von Saatgut der Bruchkornanteil ein wesentliches Qualitätskriterium, da es hier auf einen möglichst geringen Bruchkornanteil ankommt.
Die Druckschrift RU 2 455 816 C1 offenbart einen Mähdrescher, der zwei Walzenpaare aufweist, die anstelle eines konventionellen, mit einer Dreschtrommel ausgestatteten Dreschwerks zwei unmittelbar hintereinander angeordnete Walzenpaare zum Auftrennen des Erntegutstromes aufweist.
Es ist somit die Aufgabe der vorliegenden Erfindung, einen Mähdrescher der eingangs genannten Art bereitzustellen, dessen Vorrichtungen zur Auftrennung eines Erntegutstroms sich durch einen verringerten Bruchkornanteil und verringerte Verluste auszeichnen. Diese Aufgabe wird erfindungsgemäß durch die kennzeichnenden Merkmale des Anspruches 1 gelöst.
Vorteilhafte Weiterbildungen sind Gegenstand der Unteransprüche.
Gemäß dem Anspruch 1 wird vorgeschlagen, dass als eine Vorrichtung zur Auftrennung des Erntegutstroms wenigstens ein sich quer zur Längsachse des Mähdreschers erstreckend angeordnetes Walzenpaar vorgesehen ist, dessen erste Walze und zweite Walze eine Relativgeschwindigkeit zueinander aufweisen. Der Mähdrescher weist die Vorrichtung zur Auftrennung eines Erntegutstroms in zumindest zwei Gutströme, welche den zumindest einen Gutstrom an zumindest einen der Vorrichtung zugeordneten Förderboden abgibt, auf, und zudem das zumindest eine Walzenpaar.
Ein derartiges Walzenpaar kann als Vordrescheinrichtung einem Dreschwerk eines Mähdreschers, das zumindest eine Dreschtrommel und einen Dreschkorb umfasst, vorgeschaltet werden und/oder als Nachdrescheinrichtung im Bereich der Überkehrschnecke zum Einsatz kommen. Die erste Walze und die zweite Walze bewirken auf Grund Ihrer Relativgeschwindigkeit zueinander das Ausscheiden beziehungsweise Ausreiben von Korn aus den Ähren im Sinne eines Druschprozesses. Insbesondere kann das wenigstens eine Walzenpaar dem wenigstens einen Förderboden nachgeordnet angeordnet sein. Der Gutstrom kann dem mindestens einen, dem wenigstens einen Förderboden nachgeordneten, sich quer zur Längsachse des Mähdreschers erstreckend angeordneten Walzenpaar zuführbar sein, dessen gegenläufig angetriebene Walzen eine Relativgeschwindigkeit zueinander aufweisen. Hierdurch kann das Ausdreschen von Korn aus den Ähren sowie ein Entgrannen und Entspelzen des in dem Gutstrom enthaltenen Erntegutes vor dessen Abgabe an die Reinigungsvorrichtung erreicht werden, was zu einer Entlastung der Reinigungsvorrichtung beiträgt. Darüber hinaus kann durch das mindestens eine Walzenpaar eine Beschleunigung der schwereren Bestandteile des Erntegutes, insbesondere des Korns, erreicht werden, wodurch diese gegenüber dem Luftstrom eines Reinigungsgebläses, der die Fallstufe zwischen dem ersten Förderboden und der Reinigungsvorrichtung beaufschlagt, unempfindlicher werden. Ein weiterer Vorteil der Relativgeschwindigkeit des mindestens einen Walzenpaares besteht in der Reduzierung der Brückenbildung zwischen den Walzen durch Erntegut im Walzenzwickel, wodurch eine verbesserte Gutannahme im Einlaufbereich des Walzenpaares erreichbar ist. Die von der Vorrichtung zur Auftrennung von Erntegut erzeugten Gutströme können dem mindestens einen Walzenpaar zugeführt werden, so dass sich für eine als konventionelles Dreschwerk ausgeführte Vorrichtung zur Auftrennung von Erntegut Einstellmöglichkeiten ergeben, die sich positiv auf die Erntegutqualität auswirken. So lassen sich Dreschtrommeldrehzahl, Korbabstände oder Dreschkorböffnungsweiten wählen, die einen Dreschprozess gestatten, der mit reduziertem Körnerbruch einher geht, ohne den Erntegutdurchsatz des Mähdreschers zu reduzieren oder die Reinigungsvorrichtung zu überlasten, da durch das wenigstens eine Walzenpaar vorab eine Aufbereitung der Erntegutströme erfolgt, das heißt, dass diese vor Erreichen des Dreschwerkes oder der Reinigungsvorrichtung zumindest teilweise ausgedroschen, entgrannt und entspelzt werden. Die Walzen weisen eine Oberfläche aus einem elastischen Material auf. Diese Ausgestaltung der Walzen ist vorteilhaft, um Kornbruch während der Behandlung des Erntegutes, das heißt dem Ausdreschen zu vermeiden.

Insbesondere kann zumindest eine Walze eine gummierte Oberfläche aufweisen. Hierdurch stellt sich ein höherer Reibwert der das Erntegut bearbeitenden Oberfläche ein, wodurch das Ausreiben beziehungsweise Ausdreschen, Entgrannen und Entspelzen des Erntegutes begünstigt werden kann.

Dabei können die Materialien der Oberflächen der Walzen eine unterschiedliche Härte aufweisen. Dies ist vorteilhaft, hierdurch der Anteil an Kornbruch reduziert werden kann. Das harte Korn kann sich teilweise in das Material der Oberfläche der Walze drücken, welches die geringere Härte aufweist, so dass der Prozess des Ausdreschens, Entgrannens und Entspelzens schonender ablaufen kann.

In vorteilhafter Weiterbildung kann die Oberfläche zumindest einer der Walzen eine Profilierung aufweisen.

Des weiteren kann der Abstand der koaxial angeordneten Walzen zueinander variierbar sein. Hierbei steht die Anpassung des axialen Abstandes der Walzen bei der Verarbeitung unterschiedlicher Erntegutarten sowie die Berücksichtigung unterschiedlicher Erntebedingungen, wie Beispielsweise die Feuchtigkeit des Erntegutes, im Vordergrund. Der Abstand der ersten und der zweiten Walze kann darüber hinaus in der Weise änderbar sein, dass das Erntegut das Walzenpaar passieren kann, ohne mit diesen in Berührung zu kommen.

Vorteilhafterweise können die erste Walze und die zweite Walze unterschiedliche Außendurchmesser aufweisen.

Bevorzugt kann die Drehzahl der jeweiligen Walze variierbar sein. Dies ermöglicht eine flexible Anpassung an unterschiedliche Erntegutarten sowie Erntebedingungen. Die Variation der Drehzahl kann dabei in Abhängigkeit von den unterschiedlichen Erntegutarten sowie den vorherrschenden Erntebedingungen erfolgen.

Vorzugsweise kann die Walze, deren Oberfläche eine geringere Härte aufweist, mit der höheren Drehzahl angetrieben werden.

Weiterhin kann das mindestens eine Walzenpaar mechanisch, hydraulisch oder elektrisch antreibbar sein. Als mechanischer Antrieb kommt ein Riemenantrieb in Frage, der auf einfache Weise eine Anpassung der Drehzahlen der Walzen ermöglicht.

Alternativ können die Walzen mittels Elektromotoren einzeln angetrieben werden, wobei durch einen jedem Elektromotor zugeordneten Frequenzumrichter die Drehzahl der jeweiligen Walze in einfacher Weise variierbar ist.

Vorteilhafterweise kann das mindestens eine Walzenpaar auf einer Ebene unterhalb des ersten Förderbodens und oberhalb der Reinigungseinrichtung angeordnet sein.

Des Weiteren kann der jeweiligen Walze ein Abstreifelement zugeordnet sein. Dieses kann dazu dienen, Ablagerungen auf der Oberfläche der Walze zumindest zu reduzieren, die zu einer Funktionsbeeinträchtigung der Walzen führen können.

Weiterhin betrifft die Erfindung die Verwendung wenigstens eines sich quer zur Längsachse des Mähdreschers erstreckend angeordneten Walzenpaares nach einem der Ansprüche 1 bis 12 als Dreschvorrichtung.

Des weiteren kann die Verwendung wenigstens eines sich quer zur Längsachse des Mähdreschers erstreckend angeordneten Walzenpaares nach einem der Ansprüche 1 bis 12 als Nachdrescheinrichtung vorgesehen sein.

Die vorliegende Erfindung wird nachstehend anhand von in den Zeichnungen dargestellten Ausführungsbeispielen näher erläutert.

Es zeigen:
- Fig. 1: eine schematisierte Längsschnittdarstellung eines Mähdreschers;
- Fig. 2: eine vergrößerte Ansicht eines Teilbereichs des Mähdreschers umfassend eine Abscheide- und Reinigungseinrichtung;
- Fig. 3: eine perspektivische Ansicht eines Walzenpaares;
- Fig. 4: eine Draufsicht auf das Walzenpaar gemäß Fig. 3.

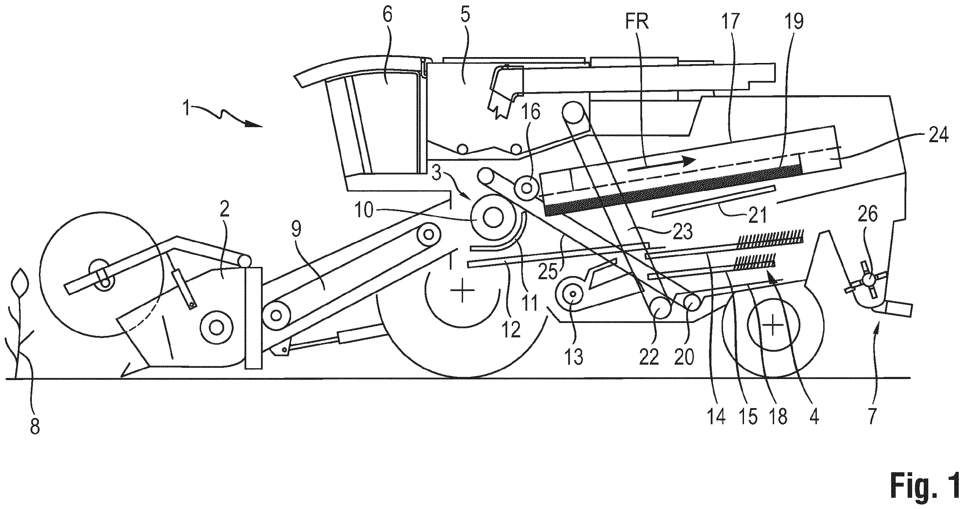

Die Darstellung in Fig. 1 zeigt eine Längsschnittdarstellung eines Mähdrescher 1. Der Mähdrescher 1 trägt in seinem Frontbereich ein höhenverstellbares Schneidwerk 2, welches gewachsenes Erntegut 8 auf großer Breite aberntet und in seitlicher Richtung zusammenführt und an ein Schrägförderorgan 9 übergibt. Über das Schrägförderorgan 9 gelangt das Erntegut 8 in an sich bekannter Weise zu Dreschorganen 3, die in der Darstellung der Fig. 1 eine Dreschtrommel 10, eine dieser nachgeordnete Wendetrommel 16 und einen Dreschkorb 11 umfassen. Durch Öffnungen des Dreschkorbs 11 hindurch wird aus dem Erntegut 8 ein im Wesentlichen aus einem Gemisch aus Körnern, Kurzstroh und Spreu bestehender Erntegutstrom abgeschieden, der auf einen Vorbereitungsboden 12 fällt. Durch Rüttelbewegungen des oszillierend angetriebenen Vorbereitungsbodens 12 wird das Erntegut darauf nach hinten in Richtung einer Reinigungseinrichtung 4 gefördert.

Der nicht durch den Dreschkorb 11 hindurch getretene Teil des Erntegutstroms wird über die Wendetrommel 16 zu einem als Axialrotor 17 ausgeführten Abscheidevorrichtung weiterbefördert, der sich in Längsrichtung des Mähdreschers 1 erstreckt. Der Axialrotor 17 ist in seinem unteren Bereich von einem halbzylindrischen Sieb 19 umgeben, über das ein im Wesentlichen aus einem Gemisch aus Körnern und Ährenbruchstücken bestehender Erntegutstrom abgeschieden wird, der auf einen unterhalb des Siebs 19 des Axialrotors 17 angeordneten Rücklaufboden 21 gelangt.

Anstelle eines einzelnen Axialrotors 17 könnten auch zwei Axialrotoren parallel nebeneinander vorgesehen sein. Alternativ kann als Abscheidevorrichtung ein Hordenschüttler anstelle des Axialrotors 17 zum Einsatz kommen.

Erntegut, im Wesentlichen Stroh, welches am rückwärtigen Ende 24 des Axialrotors 17 ausgeworfen wird, gelangt zu einem Verteiler 7 am Heck des Mähdreschers 1, wo es von einem Häcksler 26 zerkleinert und schließlich auf den Boden eines Feldes ausgebracht wird.

Auf dem rüttelnd bewegten Rücklaufboden 21 wird das durch das Sieb 19 abgegebene Erntegut vorwärts in Richtung der Dreschorgane 3 gefördert und an die Reinigungseinrichtung 4 übergeben, wo sich der Erntegutstrom des Rücklaufbodens 21 mit dem durch den Dreschkorb 11 hindurch getretenen Erntegutstrom vereinigt, der von dem Vorbereitungsboden 12 an die Reinigungseinrichtung 4 abgegeben wird.

Die Reinigungseinrichtung 4 umfasst ein Obersieb 14, ein Untersieb 15 und ein Reinigungsgebläse 13, welches einen durch und über die Siebe 14, 15 streichenden Luftstrom erzeugt. Das in den vom Vorbereitungsboden 12 beziehungsweise vom Rücklaufboden 21 kommenden Erntegutströmen enthaltene Korn passiert nacheinander das Obersieb 14 sowie das Untersiebe 15 und erreicht über einen darunter liegenden Boden 18 eine Schneckenfördereinrichtung 22 und einen Kornelevator 23, der es in einen im Rücken der Fahrerkabine 6 angeordneten Korntank 5 fördert.

Anteile des Erntegutstroms, die leichter als das Korn sind, werden beim Herabfallen vom Vorbereitungsboden 12 auf das Obersieb 14, vom Obersieb 14 auf das Untersieb 15 oder vom Untersieb 15 auf den Boden 18 von dem Luftstrom des Reinigungsgebläses 13 erfasst und mitgerissen, erreichen den Verteiler 7 und werden über diesen ausgeschieden. Schwere, gröbere Anteile des Erntegutstromes, wie unausgedroschene Ährenspitzen, gelangen über eine Überkehr am rückwärtigen Ende der Siebe 14, 15 in einen unterhalb der Siebe 14, 15 quer verlaufenden Graben. Eine in dem Graben rotierende Schnecke 20 räumt das Material seitwärts zu einem Überkehrelevator 25, der es zurück zu den Dreschorganen 3 befördert.

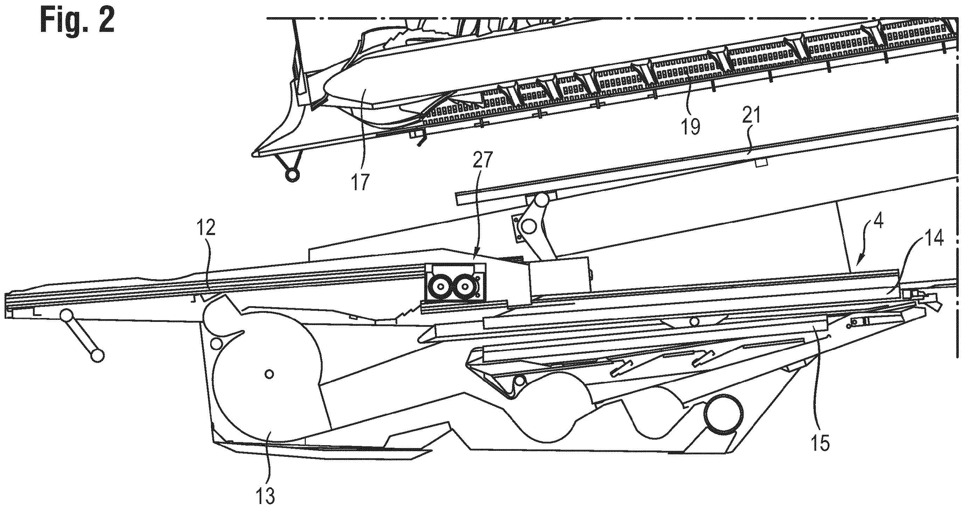

In Fig. 2 ist eine vergrößerte Ansicht eines Teilbereichs des Mähdreschers umfassend die Abscheide- und Reinigungseinrichtung dargestellt. Der Darstellung ist die Anordnung von Vorbereitungsboden 12 und Rücklaufboden 21 zueinander zu entnehmen, denen zumindest ein Walzenpaar 27 zugeordnet ist. Das wenigstens eine Walzenpaar 27 ist dem Vorbereitungsboden 12 nachgeordnet angeordnet, so dass von diesem abgegebenes Erntegut dem Walzenpaar 27 für eine Nachbehandlung zugeführt wird. Von dem Rücklaufboden 21 abgegebenes Erntegut gelangt zunächst auf den Vorbereitungsboden 12 oder wird unmittelbar an das Walzenpaar 27 abgegeben. Das Walzenpaar 27 gibt das nachbehandelte Erntegut an die Reinigungseinrichtung 4 ab, der es über eine kurze Wegstrecke hinweg im freien Fall zugeführt wird. Während des Passierens dieser Wegstrecke wird das nachbehandelte Erntegut durch das Reinigungsgebläse 13 mit einem Luftstrom beaufschlagt, der Nichtkornbestandteile abfördert, während die schwereren Kornbestandteile auf das Obersieb 14 der Reinigungseinrichtung 4 gelangen. Die zusätzliche Beschleunigung des Erntegutes durch das Walzenpaar 27 ermöglicht eine Erhöhung der Drehzahl des Reinigungsgebläses 13, wodurch die Leistung der Reinigungseinrichtung 4 erhöht werden kann. Dies führt dazu, dass der Anteil des Erntegutes, der als Überkehr den Dreschorganen 3 erneut zugeführt werden muss, reduziert wird.

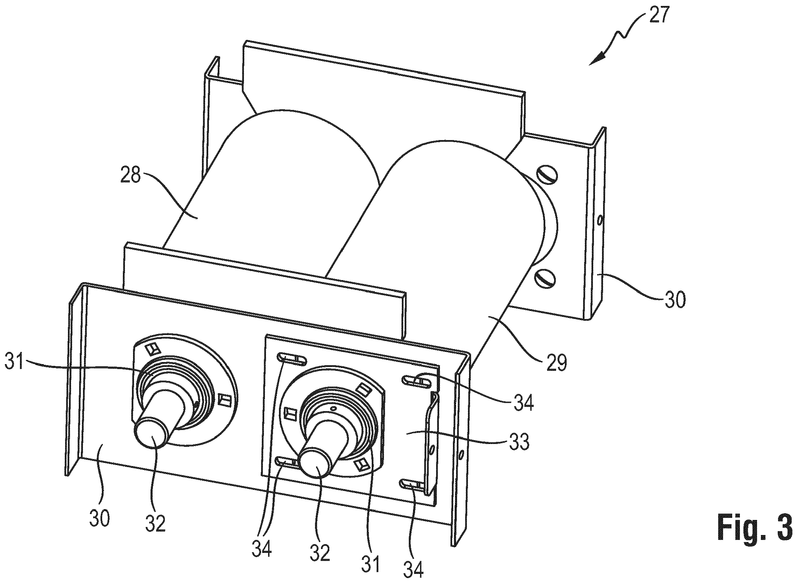

In Fig. 3 ist eine perspektivische Ansicht eines Walzenpaares 27 dargestellt, welches eine erste Walze 28 und eine zweite Walze 29 umfasst. Das Walzenpaar 27 ist zwischen zwei Rahmenelementen 30 angeordnet, die spiegelbildlich aufgebaut sind, so dass auf eine Darstellung der gegenüberliegenden Seite verzichtet wurde. In den Rahmenelemente 30 sind Lagerstellen 31 angeordnet, beispielsweise Lagerbuchsen, so dass die erste Walze 28 und die zweite Walze 29 drehbar gelagert sind. Die erste Walze 28 und die zweite Walze 29 weisen jeweils eine Drehachse 32 auf, die zumindest auf einer Seite über die entsprechende Lagerstelle 31 hinausragen. Auf diese Weise sind die Drehachsen 32 mit einem Antrieb verbindbar. Wie der Darstellung in Fig. 3 weiterhin entnehmbar ist, ist die zweite Walze 28 gegenüber dem Rahmenelement 30 in Längsrichtung verschiebbar angeordnet. Hierzu ist auf dem Rahmenelement 30 eine Platte 33 angeordnet, welche Langlöcher 34 aufweist, die die das Verschieben und Fixieren der Platte 33 gegenüber dem Rahmenelement 30 ermöglichen. Das manuelle Verschieben der Platte 33 ermöglicht eine Veränderung des Abstandes der Drehachsen 32 des Walzenpaares 27 zueinander, um eine Anpassung an verschiedene zu verarbeitende Erntegutarten zu ermöglichen. Das Verschieben und Fixieren kann, wie ausgeführt manuell erfolgen. Denkbar ist es aber auch, durch ein automatisches Verschieben einer der Drehachsen relativ zu der anderen Drehachse des Walzenpaares den Abstand der Drehachsen Fruchtartabhängig anpassen zu können.

Die erste Walze 28 und die zweite Walze 29 besitzen eine Oberfläche aus unterschiedlichen elastischen Materialien, wobei die jeweiligen Materialien eine unterschiedliche Härte aufweisen. Insbesondere weist eine der beiden Walzen 28, 29 eine gummierte Oberfläche auf, so dass sich das Erntegut teilweise in die Oberfläche eindrückt, was zu einer schonenden Verarbeitung führt.

Der Antrieb der ersten und der zweiten Walze 28, 29 erfolgt mechanisch durch einen Riemenantrieb oder elektrisch durch einen Elektromotor, der mittels eines Frequenzumrichters regelbar ist. In Abhängigkeit von der Antriebsart kann ein festes Übersetzungsverhältnis für die Antriebsdrehzahlen der beiden Walzen 28, 29 vorgegeben werden oder die erste Walze 28 und die zweite Walze 29 werden unabhängig voneinander angetrieben. Die Relativgeschwindigkeit zwischen der ersten Walze 28 und der zweiten Walze 29 bewirkt einen Reibeeffekt, wodurch das von dem Vorbereitungsboden 12 an das Walzenpaar 27 abgegebene Erntegut durch das Reiben ausgedroschen, entgrannt und entspelzt wird. Ein weiterer Vorteil besteht darin, dass die Gutannahme durch die Walzen verbessert wird, da eine Brückenbildung im Walzenzwickel vermieden werden kann. Die sich in Folge der Reibung zwischen der ersten Walze 28 und der zweiten Walze 29 von den Körnern im Erntegut abgelösten Grannen und Spelzen werden durch den Luftstrom, der von dem Reinigungsgebläse 13 abgegeben wird, erfasst und über die Siebe 14, 15 hinweg in Richtung des Häckslers 26 gefördert. Um den Einfluss des von dem Reinigungsgebläse 13 abgegeben Luftstromes, der im Wesentlichen quer zur Fallrichtung auf das Erntegut während seines freien Falls beim Austreten aus dem Walzenpaar 27 auftrifft, zu kompensieren, erfährt das Erntegut durch das Walzenpaar 27 eine zusätzliche Beschleunigung, wodurch die schwereren Kornbestandteile eine geringe Ablenkung durch den vom Reinigungsgebläse 13 abgegebenen Luftstrom erfahren, während die deutlich leichteren Grannen und Spelzen zumindest teilweise von diesem Luftstrom davongetragen werden.

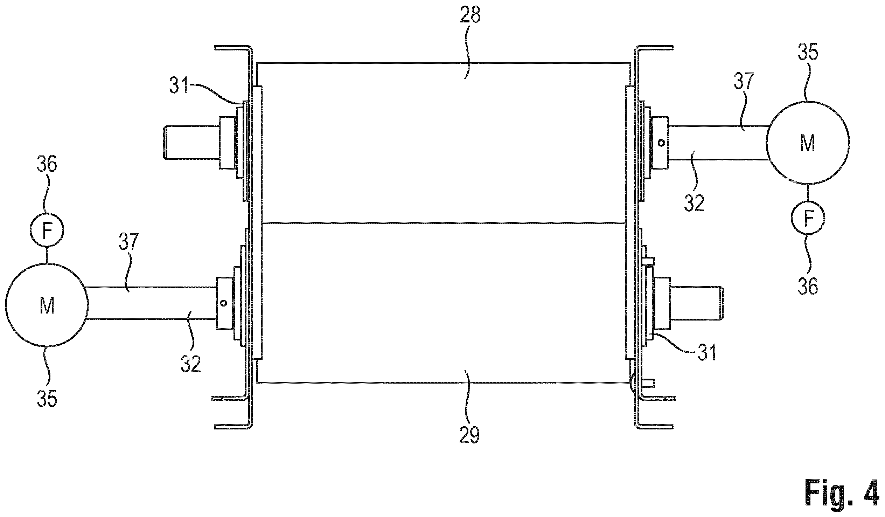

Die Darstellung in Fig. 4 zeigt eine Draufsicht auf das Walzenpaar 27 gemäß Fig. 3. Dargestellt ist eine Ausführungsform, bei der die Walzen 28, 29 einzelmotorisch von jeweils einem Elektromotor 35, wie einem Drehstrommotor, angetrieben werden. Der jeweilige Elektromotor 35 ist über eine Antriebswelle 37 mit der Drehachse 32 der jeweiligen Walze 28, 29 antriebsmäßig verbunden. Um verschiedene Antriebsdrehzahlen bereitzustellen, sind die Elektromotoren 35 durch Frequenzumrichter 36 regelbar. Der Abstand der Elektromotoren 35 ist entsprechend dem Abstand der Drehachsen 32 zueinander veränderbar mit diesen veränderbar.

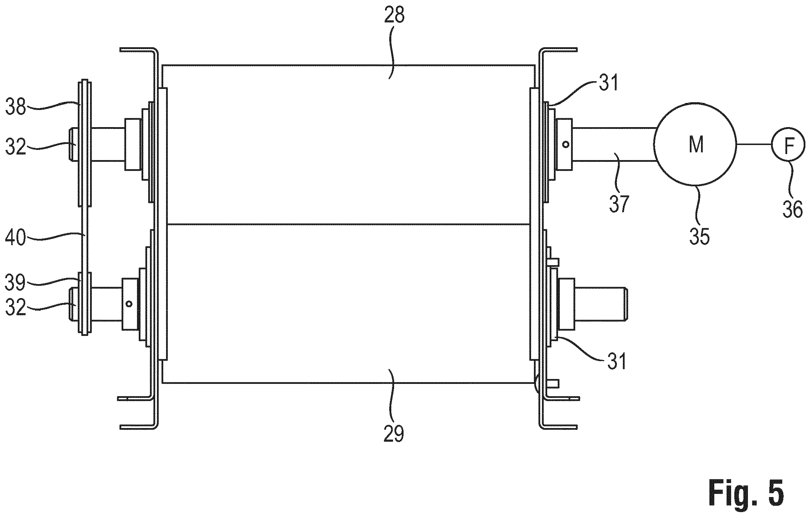

Eine weitere Ausführungsform ist in Fig. 5 dargestellt. Die erste Walze 28 wird durch den mit der Drehachse 32 antriebsmäßig verbundenen Elektromotor 34 angetrieben, der mittels des Frequenzumrichters 35 regelbar ist. Auf der gegenüberliegenden Seite der ersten Walze 28 ist an die Drehachse 32 eine erste Riemenscheibe 38 angeflanscht, die über einen Riemen 40 mit einer auf der Drehachse 32 der zweiten Walze 29 angeordneten zweiten Riemenscheibe 39 in Wirkverbindung steht. Durch die unterschiedliche Größe der ersten und der zweiten Riemenscheiben 38, 39 lässt sich ein Drehzahlverhältnis zwischen der ersten Walze 28 und der zweiten Walze 29 festlegen, während die von dem Elektromotor 34 abgegebene Antriebsdrehzahl variable ist, um an unterschiedliche Erntegutarten und verschiedene Durchsatzmengen angepasst werden zu können. Im Fall des riemengetriebenen Walzenpaares 27 kann der Riemen 40 durch eine Umlenkrolle unter Spannung gehalten werden, um bei einer Abstandsänderung zwischen den Drehachsen 32 der ersten Walze 28 und der zweiten Walze 29 die Riemenspannung aufrecht zu erhalten, wobei die Umlenkrolle nachgeführt wird.

Eine weitere Option besteht in der zusätzlichen Anordnung zumindest eines weiteren vorstehend beschriebenen Walzenpaares 27 im Bereich des Überkehrelevators 25. Durch dieses zusätzliche Walzenpaar 27 kann das von der Reinigungseinrichtung 4 als Überkehr abgegebene Erntegut nachbearbeitet werden, bevor es von dem Überkehrelevator 25 an die Dreschorgane 3 oder durch eine geeignete Fördervorrichtung unmittelbar an die Reinigungsvorrichtung 4 übergeben wird.

**Bezugszeichenliste**

| | | | |
|---|---|---|---|
| **1** | Mähdrescher | **31** | Lagerstelle |
| **2** | Schneidwerk | **32** | Drehachse |
| **3** | Dreschorgane | **33** | Platte |
| **4** | Reinigungseinrichtung | **34** | Langloch |
| **5** | Korntank | **35** | Elektromotor |
| **6** | Fahrerkabine | **36** | Frequenzumrichter |
| **7** | Verteiler | **37** | Antriebswelle |
| **8** | Erntegut | **38** | Erste Riemenscheibe |
| **9** | Schrägförderorgan | **39** | Zweite Riemenscheibe |
| **10** | Dreschtrommel | **40** | Riemen |
| **11** | Dreschkorb | | |
| **12** | Vorbereitungsboden | | |
| **13** | Reinigungsgebläse | | |
| **14** | Obersieb | | |
| **15** | Untersieb | | |
| **16** | Wendetrommel | | |
| **17** | Axialrotor | | |
| **18** | Boden | | |
| **19** | Sieb | | |
| **20** | Schnecke | | |
| **21** | Rücklaufboden | | |
| **22** | Schneckenfördereinrichtung | | |
| **23** | Kornelevator | | |
| **24** | Rückwärtiges Ende | | |
| **25** | Überkehrelevator | | |
| **26** | Häcksler | | |
| **27** | Walzenpaar | | |
| **28** | Erste Walze | | |
| **29** | Zweite Walze | | |
| **30** | Rahmenelement | | |

## Patentansprüche

1. Mähdrescher (1) mit zumindest einer aus Dreschorganen, eine
Dreschtrommel (10), eine Wendetrommel (16) und einen Dreschkorb (11) umfassend, bestehenden Vorrichtung (3, 17) zur Auftrennung eines Erntegutstroms in zumindest zwei, eine unterschiedliche Zusammensetzung an Erntegutbestandteilen aufweisende Gutströme, welche zumindest einen Gutstrom an zumindest einen der Vorrichtung (3, 17) zugeordneten Förderboden (12) abgibt, welcher den Gutstrom an eine Reinigungseinrichtung (4) übergibt, **dadurch gekennzeichnet, dass** als eine weitere Vorrichtung zur Auftrennung des Erntegutstroms wenigstens ein sich quer zur Längsachse des Mähdreschers (1) erstreckend angeordnetes Walzenpaar (27) vorgesehen ist, dessen erste Walze (28) und zweite Walze (29) eine Relativgeschwindigkeit zueinander aufweisen und das wenigstens eine Walzenpaar (27) dem wenigstens einen Förderboden(12) nachgeordnet ist oder als Nachdrescheinrichtung im Bereich einer Überkehrschschnecke angeordnet ist, oder der aus Dreschorganen bestehenden Vorrichtung als Vordrescheinrichtung vorgeschaltet ist und die erste Walze (28) und die zweite Walze (29) eine Oberfläche aus einem elastischen Material aufweisen.

2. Mähdrescher (1) nach Anspruch 1, **dadurch gekennzeichnet, dass** zumindest eine Walze (28, 29) eine gummierte Oberfläche aufweist.

3. Mähdrescher (1) nach einem der Ansprüche 1 bis 2, **dadurch gekennzeichnet, dass** die Materialien der Oberflächen der ersten Walze (28) und der zweiten Walze (29) eine unterschiedliche Härte aufweisen.

4. Mähdrescher (1) nach einem der Ansprüche 1 bis 3, **dadurch gekennzeichnet, dass** die Oberfläche zumindest einer der Walzen (28, 29) eine Profilierung aufweist.

5. Mähdrescher (1) nach einem der Ansprüche 1 bis 4, **dadurch gekennzeichnet, dass** der Abstand der koaxial zueinander angeordneten ersten Walze (28) und zweiten Walze (29) zueinander variierbar ist.

6. Mähdrescher (1) nach einem der Ansprüche 1 bis 5, **dadurch gekennzeichnet, dass** die erste Walze (28) und die zweite Walze (29) unterschiedliche Außendurchmesser aufweisen.

7. Mähdrescher (1) nach einem der Ansprüche 1 bis 6, **dadurch gekennzeichnet, dass** die Drehzahl der ersten Walze (28) und der zweiten Walze (29) variierbar ist.

8. Mähdrescher (1) nach einem der Ansprüche 1 bis 7, **dadurch gekennzeichnet, dass** das mindestens eine Walzenpaar (27) mechanisch, hydraulisch oder elektrisch antreibbar ist.

9. Mähdrescher (1) nach einem der Ansprüche 1 bis 8, **dadurch gekennzeichnet, dass** das mindestens eine Walzenpaar (27) auf einer Ebene unterhalb des ersten Förderbodens (12) und oberhalb der Reinigungseinrichtung (4) angeordnet ist.

10. Mähdrescher (1) nach einem der Ansprüche 1 bis 9, **dadurch gekennzeichnet, dass** der ersten Walze (28) und der zweiten Walze (29) jeweils ein Abstreifelement zugeordnet ist.

## Claims

1. A combine harvester (1) comprising at least one device (3, 17) comprising threshing members, including a threshing drum (10), a turning drum (16) and a threshing concave (11), for separating a flow of crop material into at least two crop flows involving a differing composition of crop material constituents and which delivers at least one crop flow to at least one conveyor plate (12) which is associated with the device (3, 17) and which transfers the crop flow to a cleaning device (4), **characterised in that** provided as a further device for separation of the crop material flow is at least one pair of rollers (27) which is arranged to extend transversely relative to the longitudinal axis of the combine harvester (1) and of which the first roller (28) and the second roller (29) have a relative speed with respect to each other and the at least one pair of rollers (27) is arranged downstream of the at least one conveyor plate (12) or is arranged as a post-threshing device in the region of a returns auger or is disposed upstream of the device comprising threshing members as a pre-threshing device and the first roller (28) and the second roller (29) have a surface of an elastic material.

2. A combine harvester (1) according to claim 1 **characterised in that** at least one roller (28, 29) has a rubberised surface.

3. A combine harvester (1) according to one of claims 1 and 2 **characterised in that** the materials of the surfaces of the first roller (28) and the second roller (29) are of differing hardness.

4. A combine harvester (1) according to one of claims 1 to 3 **characterised in that** the surface of at least one of the rollers (28, 29) has a profiling.

5. A combine harvester (1) according to one of claims 1 to 4 **characterised in that** the spacing of the first roller (28) and the second roller (29) which are arranged in mutually coaxial relationship is variable relative to each other.

6. A combine harvester (1) according to one of claims 1 to 5 **characterised in that** the first roller (28) and the second roller (29) are of different outside diameters.

7. A combine harvester (1) according to one of claims 1 to 6 **characterised in that** the speed of rotation of the first roller (28) and the second roller (29) is variable.

8. A combine harvester (1) according to one of claims 1 to 7 **characterised in that** the at least one pair of rollers (27) is drivable mechanically, hydraulically or electrically.

9. A combine harvester (1) according to one of claims 1 to 8 **characterised in that** the at least one pair of roller (27) is arranged on a plane beneath the first conveyor plate (12) and above the cleaning device (4).

10. A combine harvester (1) according to one of claims 1 to 9 **characterised in that** a respective stripping element is associated with the first roller (28) and the second roller (29).

## Revendications

1. Moissonneuse-batteuse (1) comprenant au moins un dispositif (3, 17) composé d'organes de battage, d'un batteur (10), d'un tire-paille (16) et d'un contre-batteur (11) pour séparer un flux de produit récolté en au moins deux flux de produit présentant une composition différente en composants de produit récolté, lequel dispositif (3, 17) délivre au moins un flux de produit à au moins une table de préparation (12) qui lui est associée, laquelle transmet le flux de produit à un équipement de nettoyage (4), **caractérisée en ce que**, à titre de dispositif supplémentaire pour séparer le flux de produit récolté, est prévue au moins une paire de rouleaux (27) qui est disposée en s'étendant transversalement à l'axe longitudinal de la moissonneuse-batteuse (1) et dont le premier rouleau (28) et le second rouleau (29) présentent l'un par rapport à l'autre une vitesse relative, et **en ce que** la au moins une paire de rouleaux (27) est disposée en aval de la au moins une table de préparation (12) ou est disposée comme équipement de postbattage dans la zone d'une vis de retour d'ôtons, ou est disposée comme équipement de prébattage en amont du dispositif constitué des organes de battage, et le premier rouleau (28) et le second rouleau (29) présentent une surface en matériau élastique.

2. Moissonneuse-batteuse (1) selon la revendication 1, **caractérisée en ce qu'**au moins un rouleau (28, 29) présente une surface caoutchoutée.

3. Moissonneuse-batteuse (1) selon une des revendications 1 à 2, **caractérisée en ce que** les matériaux des surfaces du premier rouleau (28) et du second rouleau (29) présentent des duretés différentes.

4. Moissonneuse-batteuse (1) selon une des revendications 1 à 3, **caractérisée en ce que** la surface au moins d'un des rouleaux (28, 29) présente un profilage.

5. Moissonneuse-batteuse (1) selon une des revendications 1 à 4, **caractérisée en ce que** l'écartement des premier rouleau (28) et second rouleau (29) disposés coaxialement l'un à l'autre est variable.

6. Moissonneuse-batteuse (1) selon une des revendications 1 à 5, **caractérisée en ce que** le premier rouleau (28) et le second rouleau (29) présentent des diamètres extérieurs différents.

7. Moissonneuse-batteuse (1) selon une des revendications 1 à 6, **caractérisée en ce que** la vitesse de rotation du premier rouleau (28) et du second rouleau (29) est variable.

8. Moissonneuse-batteuse (1) selon une des revendications 1 à 7, **caractérisée en ce que** la au moins une paire de rouleaux (27) peut être entraînée de manière mécanique, hydraulique ou électrique.

9. Moissonneuse-batteuse (1) selon une des revendications 1 à 8, **caractérisée en ce que** la au moins une paire de rouleaux (27) est disposée sur un plan situé au-dessous de la première table de préparation (12) et au-dessus de l'équipement de nettoyage (4).

10. Moissonneuse-batteuse (1) selon une des revendications 1 à 9, **caractérisée en ce qu'**à chacun du premier rouleau (28) et du second rouleau (29) est associé un élément racleur.
